# EUROPEAN PATENT SPECIFICATION

(11) **EP 3 624 218 B1**
(45) Date of publication and mention of the grant of the patent: **05.05.2021**
(21) Application number: 19177853.9
(22) Date of filing: 03.06.2019
(51) Int. Cl.: H01M 50/502, H01M 50/20

(54) **BATTERY MODULE**
BATTERIEMODUL
MODULE DE BATTERIE

(30) Priority: 14.09.2018 CN 201811076080
(43) Date of publication of application: 18.03.2020
(73) Proprietor: Contemporary Amperex Technology Co., Limited, Jiaocheng District Ningde City, Fujian 352100 (CN)
(72) Inventor: ZENG, Yuqun, Ningde, Fujian 352100 (CN); ZHAO, Fenggang, Ningde, Fujian 352100 (CN); CHEN, Chuanlian, Ningde, Fujian 352100 (CN); XIANG, Yanhuo, Ningde, Fujian 352100 (CN); HUANG, Yangzhi, Ningde, Fujian 352100 (CN)
(74) Representative: KIPA AB

(56) References cited:
- WO-A1-2017/138318
- WO-A1-2018/015038
- CN-A- 107 204 418
- DE-U1-202017 006 171

## Description

### TECHNICAL FIELD

The present disclosure relates to the technical field of power storage device, and in particular, relates to a battery module.

### BACKGROUND

With a transformation of energy resource structure, the sustainable electric energy has gradually replaced traditional fossil fuels and become a mainstream energy source. For example, electric vehicles are replacing traditional fuel vehicles and becoming a new trend of development, accompanying with a rapid development of rechargeable batteries.

As regards a battery module in which a plurality of battery units are connected in series, a conventional arrangement of electrode connection pieces limits a diversity of configuration of the battery module, and has deficiencies with respect to heat dissipation and safety, which are not conducive to energy density of the battery module. DE202017006171U1 discloses a cell contacting system for an electrochemical device. CN107204418 A discloses an aluminum wire welding busbar.

### SUMMARY

In view of the above problems, the present invention provides a battery module as described in the appended claims.

According to a first aspect of the invention a battery module as described in appended claim 1 is provided. The battery module includes: a plurality of battery units connected in series; an electrode output connecting piece disposed at an output end of the plurality of battery units; a plurality of bridging busbars, each connecting two battery units spaced by another battery unit or more battery units among the plurality of battery units; and an adjacent busbar connecting adjacent battery units among the plurality of battery units. An electrical connection path is formed in the battery module by the electrode output connecting piece, the plurality of bridging busbars and the adjacent busbar. At least two of the plurality of bridging busbars partially overlap with and fit one another in an electrical insulation manner as a group. The plurality of bridging busbars comprises an upper bridging busbar and a lower bridging busbar, the upper bridging busbar and the lower bridging busbar partially overlapping with each other in an electrical insulation manner, an insulator is provided between the upper bridging busbar and the lower bridging busbar, and a periphery of the insulator extends beyond a circumference of an overlapping portion between the upper bridging busbar and the lower bridging busbar by 2mm to 6 mm.

In an embodiment, the upper bridging busbar comprises an upper body portion, a first upper connecting piece and a second upper connecting piece, and the first upper connecting piece and the second upper connecting piece protrude from a same side of the upper body portion, at least one of the first upper connecting piece and the second upper connecting piece is connected to the upper body portion via an arc transition.

In an embodiment, the lower bridging busbar includes a lower body portion, a first lower connecting piece and a second lower connecting piece, the first lower connecting piece and the second lower connecting piece protruding from the lower body portion at a same side.

In an embodiment, surfaces of the first upper connecting piece, the second upper connecting piece, the first lower connecting piece and the second lower connecting piece facing towards the plurality of battery units are coplanar.

In an embodiment, each of the first upper connecting piece, the second upper connecting piece, the first lower connecting piece and the second lower connecting piece is provided with a locating hole.

In an embodiment, a distance D1 between the locating hole of the first upper connecting piece and the locating hole of the first lower connecting piece is equal to a distance D2 between the locating hole of the second upper connecting piece and the locating hole of the second lower connecting piece.

In an embodiment, the distance D1 between the locating hole of the first upper connecting piece and the locating hole of the first lower connecting piece is five times to fifteen times a distance P1 between the first upper connecting piece and the first lower connecting piece.

In an embodiment, the distance D2 between the locating hole of the second upper connecting piece and the locating hole of the second lower connecting piece is five times to fifteen times a distance P2 between the second upper connecting piece and the second lower connecting piece.

The technical solution provided by the present disclosure brings following benefits.

In the battery module provided by the present disclosure, a plurality of battery units is connected in series by the bridging busbars and the adjacent busbars. This can provide an important support to a diversity of configuration of the battery module.

For example, arranging two electrode output connecting pieces of the battery module on a same side of the battery module can not only reduce a dimension of the whole battery module and enhance the energy density of the battery module, but also reduce a length of the bridging busbar. In this way, the bridging busbars will generate less heat during operation of the battery module, and thus the safety performance of the battery module can be improved.

Further, errors are less likely to occur during an assembly process of the battery module when the bridging busbars have a smaller length, thereby facilitating the assembly process of the battery module. In addition, at least two of the plurality of the bridging busbars overlap with and fit one another in an insulation manner as a group, which can prevent the bridging busbars from occupying too large space in the battery module, thereby improving compactedness and energy density of the battery module.

### BRIEF DESCRIPTION OF DRAWINGS

FIG. 1 is a structural schematic diagram of a battery module according to an embodiment of the present disclosure;
FIG. 2 is a top view of the battery module shown in FIG. 1;
FIG. 3 is a structural schematic diagram of a part in the battery module according to an embodiment of the present disclosure;
FIG. 4 is a structural schematic diagram of a connecting piece group in the battery module according to an embodiment of the present disclosure;
FIG. 5 is an exploded view of the structure shown in FIG. 4;
FIG. 6 is another structural schematic diagram of a battery module not according to an embodiment of the present disclosure;
FIG. 7 is a structural schematic diagram of a part in the battery module shown in FIG. 6; and
FIG. 8 is a structural schematic diagram of a battery cell according to an embodiment of the present disclosure.

### Reference Signs

1 - battery unit;
   11 - battery cell;
   111 - electrode terminal;
2 - electrode output connecting piece;
3 - adjacent busbar;
4 -bridging busbar;
   41 - upper bridging busbar;
      410 - upper body portion;
      411 - first upper connecting part;
         4111 - locating hole;
      412 - second upper connecting part;
   42 - lower bridging busbar;
      420 - lower body portion;
      421 - first lower connecting part;
      422 - second lower connecting part;
5 -insulator.

Accompanying drawings illustrating embodiments according to the present disclosure are incorporated in the description as a part, and used to elaborate the principle of the present disclosure.

### DESCRIPTION OF EMBODIMENTS

The present disclosure will be further described below by specific embodiments of the present disclosure in combination with the drawings.

The terms "first", "second", "third", or "fourth" in the description are used for a purpose of description only, but not intended to indicate or imply relative importance thereof. Unless otherwise specified or stated, term "a plurality of' means two or more, terms "connected", "fixed", etc. shall be understood in a broad sense. For example, the term "connected" includes various connection manners, such as fixed connection, detachable connection, integrated connection, electrical connection, direct connection or indirect connection via an intermediate medium. These skilled in the art are able to understand specific meanings of the above terms in accordance with specific circumstances.

It should be understood that terms indicating orientations or positions, such as "upper", "lower", "left", "right", etc., generally are used to describe the orientations or positions with reference to the drawings, and thus should not be construed as a limitation of the present disclosure. It also should be understood that when an element is referred as being "on" or "under" another element, the element can be directly located "on" or "under" another element or connected to another element with an intermediate element.

An embodiment of the present disclosure provides a battery module and a battery pack (not shown). The battery pack includes the battery module, and can also include a battery management system, a battery thermal management system, a battery system power distribution box, a soft connection, electrical interfaces and the like. The thermal management system can include an evaporator, a fan, an air duct, a temperature detecting mechanism and the like. One or more battery modules can be provided inside a single battery pack, and a specific number of the battery modules can be selected depending on an actual requirement.

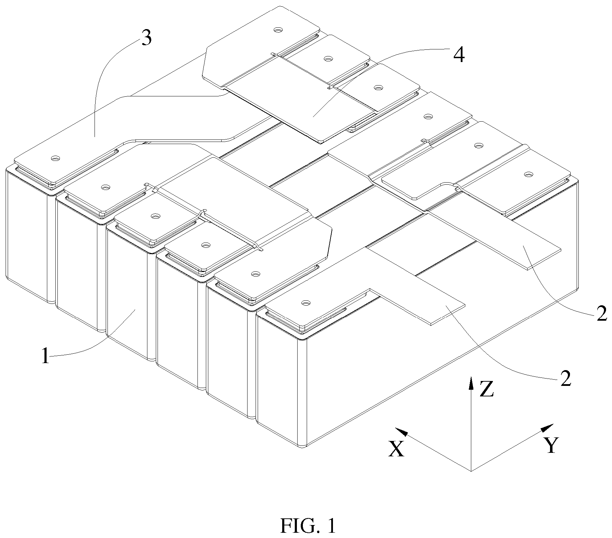

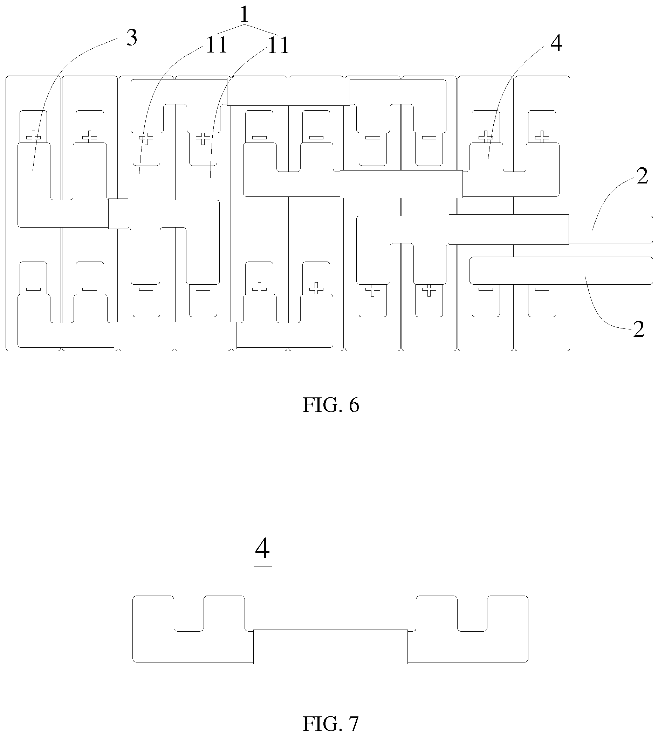

A specific structure of the battery module will be described in detail as follow. As shown in FIG. 1 and FIG. 6, a single battery module includes a frame (not shown) and a plurality of battery units 1 disposed within the frame. Specifically, as shown in FIG. 1, the battery unit 1 can be a single battery cell 11. As another example, the battery unit 1 also can be a battery group formed by connecting a plurality of battery cells 11 in parallel, aiming to increase current output of the entire battery module.

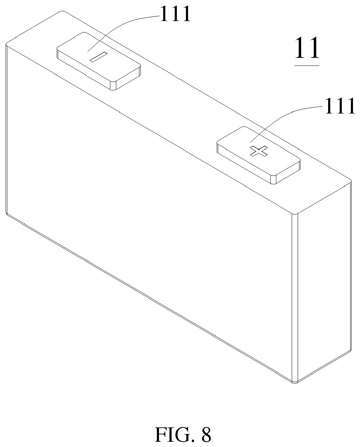

For example, the battery unit 1, as shown in FIG. 6, includes two battery cells 11. These two battery cells 11 are connected to one another in parallel through a bridging busbar 4, and further connected to another battery unit 1 in series. Specifically, as shown FIG. 8, the battery cell 11 can be in a rectangular structure and include two electrode terminals 111 having opposite polarities.

In an assembly process of the battery module, the plurality of battery units 1 is connected in series through the bridging busbar 4 and an adjacent busbar 3. In order to output electric energy of the entire battery module, the battery module is further provided with two electrode output connecting pieces 2 disposed at output ends of the battery module, acting as a positive output electrode and a negative output electrode, respectively.

With the aid of the bridging busbar 4, a length of the busbar can be reduced, and in the meantime, the two electrode output connecting pieces 2 can be disposed at a same side of the battery module, which is conducive to heat dissipation. In this way, a higher energy density can be achieved in a same assembly space, while a high safety can be guaranteed.

Specifically, in a process of connecting the plurality of battery units 1 in the battery module, among the plurality of battery units 1, two battery units 1 that are spaced by one battery unit 1 located therebetween are connected in series through the bridging busbar 4, and two adjacent battery units 1 are connected in series through the adjacent busbar 3. After being connected in series through the bridging busbars 4 and the adjacent busbars 3, the remaining two battery units 1 of the plurality of battery units 1 are connected to the two electrode output connecting pieces 2, respectively, thereby forming an electrical connection path in the battery module.

In order to further prevent the bridging busbar 4 from occupying too much space in the frame of the battery module, the plurality of bridging busbars 4 as shown in FIG. 1 are divided in groups, and each group consists of two bridging busbars 4 that partially overlap with and fit one another in an insulation manner.

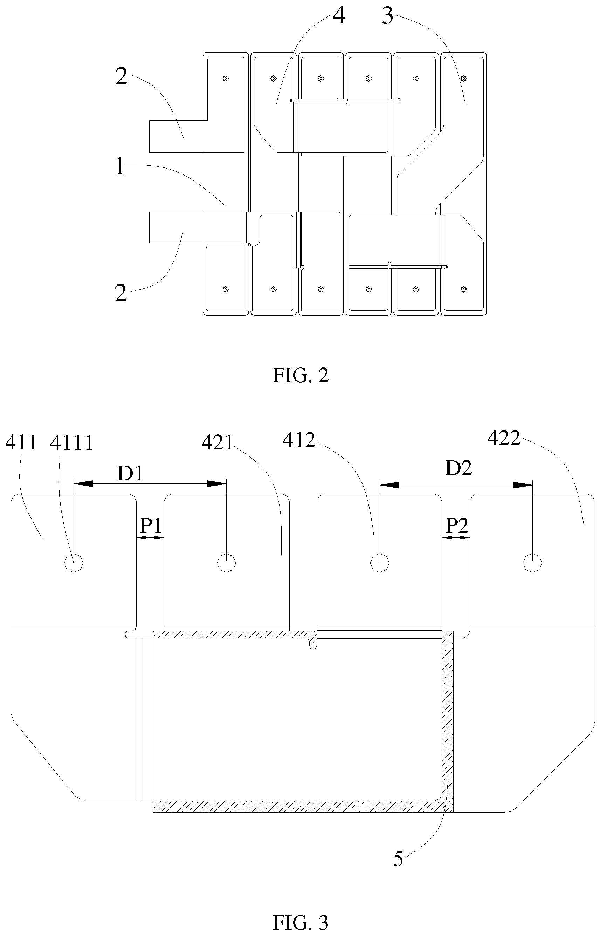

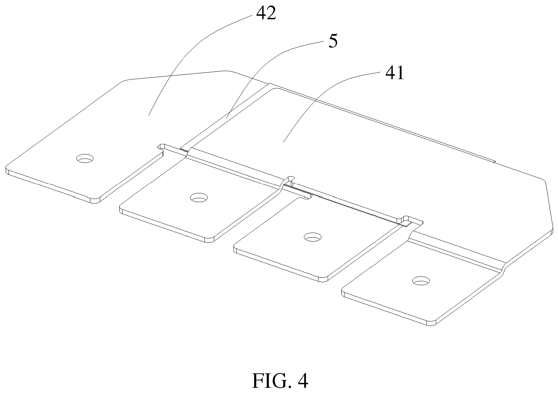

Specifically, as shown in FIG. 3 and FIG. 4, the plurality of bridging busbars 4 include an upper bridging busbar 41 and a lower bridging busbar 42 that are electrically insulated and partially overlapped. In this way, multiple bridging busbars 4 can be provided above the battery unit 1. In addition, since the bridging busbars 4 overlap with each other, space occupied by the bridging busbars 4 in a height direction of the battery module can be minimized, thereby promoting a development of the battery module having high energy density. In addition to the higher energy density, such arrangement also can have an outstanding performance with respect to heat generation. Specifically, under ensuring a same current-passing area, the bridging busbars 4 according to the above structure and arrangement can lead to a small entire dimension, thereby generating less heat during the operation of the battery module. Moreover, on the basis of the above effects, the upper bridging busbar 41 and the lower bridging busbar 42 overlap with and fit one another to form a structure having excellent property, which can prevent the upper bridging busbar 41 and the lower bridging busbar 42 from being shifted, deformed or even broken due to shaking or vibration.

In order to prevent the bridging busbar 4 from contacting the battery units 1 bridged by the bridging busbar 4, which would otherwise results in a short circuit, in an embodiment not according to the invention shown in FIG. 7, the bridging busbar 4 is provided with a protective sleeve made of an insulating material. As another embodiment, a safety space can be reserved between the bridging busbar 4 and the battery unit 1 bridged by the bridging busbar 4, so as to avoid the short circuit caused by their mutual contact.

Specifically, the electrode output connecting piece 2, the bridging busbar 4 and the adjacent busbar 3 can each be a structure made of a conductive material such as metal. In an embodiment, the electrode output connecting piece 2, the bridging busbar 4 and the adjacent busbar 3 are made of copper or aluminum. As shown in FIG. 1, the bridging busbar 4 and the adjacent busbar 3 both have a structure having a sheet shape, and a thickness and a length thereof can be selected depending upon practical requirements.

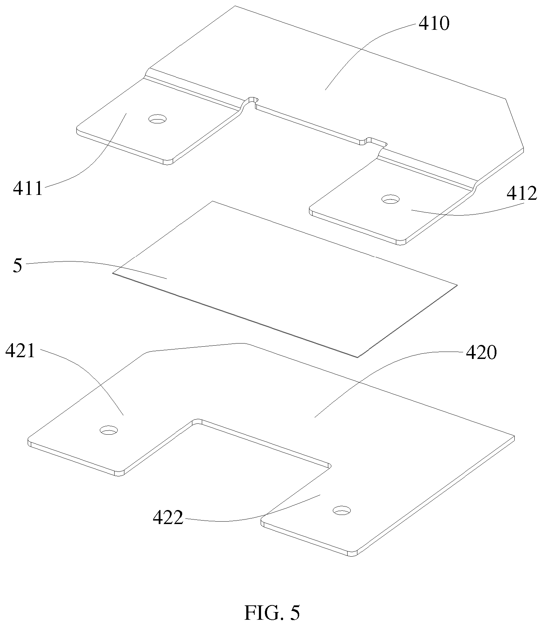

Further, as shown in FIG. 3-5, an insulator 5 is disposed between the upper bridging busbar 41 and the lower bridging busbar 42. The insulator 5 is made of an insulating material to prevent the overlapping upper bridging busbar 41 and lower bridging busbar 42 from forming an electrical connection. In this way, the space occupied by the bridging busbars 4 can be reduced, and the insulation between the upper bridging busbar 41 and the lower bridging busbar 42 is reliably guaranteed.

In an embodiment, according to the invention, as shown in FIG. 3, a periphery of the insulator 5 extends beyond a circumference of an overlapping portion between the upper bridging busbar 41 and the lower bridging busbar 42, which can further avoid a shift and an invalid electrical connection between the upper bridging busbar 41 and the lower bridging busbar 42 due to the vibration of the battery module during its operation. The periphery of the insulator 5 extends beyond the circumference of the overlapping portion between the upper bridging busbar 41 and the lower bridging busbar 42 by a specific degree that is selected depending upon specific sizes of the upper bridging busbar 41 and the lower bridging busbar 42. The periphery of the insulator 5 extends beyond the circumference of the overlapping portion by 2mm to 6 mm, and preferably 5 mm. This ensures a sufficient insulation between the upper bridging busbar 41 and the lower bridging busbar 42 on the one hand. Moreover, since the periphery of the insulator 5 can extend beyond the circumference of the overlapping portion between the upper bridging busbar 41 and the lower bridging busbar 42 by 5 mm, a certain amount of condensed water, which may be generated due to temperature change during the operation of the battery module, condenses and accumulates at the periphery of the insulator 5 and then fall down, without damaging the insulation between the upper bridging busbar 41 and the lower bridging busbar 42.

In an embodiment, the upper bridging busbar 41 and the lower bridging busbar 42 are both fit into the insulator 5 by a hot pressing or bonding process, so as to form an integrated bridging busbar group. The swell of the battery cell 11 may result in a shift of the upper bridging busbar 41 and the lower bridging busbar 42, and a movement of the insulator 5, which further leads to an invalid insulation between the upper bridging busbar 41 and the lower bridging busbar 42. The integrated bridging busbar group can avoid the shift of the upper bridging busbar 41 and the lower bridging busbar 42, enhance an assembly efficiency of the battery module, and reduce a probability of error occurrence during the assembly of the battery module. More specifically, the insulator 5 can be made of a flexible insulating material. In an embodiment, the insulator 5 has an elastic modulus greater than or equal to 3000 MPa, so that the insulator 5 can avoid an invalid connection between the bridging busbar 4 and the electrode terminal 111, which is caused by the swell of the battery unit 1 during the operation of the battery module. For example, the insulator 5 can be formed in one piece by means of injection molding of polyethylene terephthalate (PET) plastic.

The upper bridging busbar 41 includes an upper body portion 410, a first upper connecting piece 411 and a second upper connecting piece 412. The first upper connecting piece 411 and the second upper connecting piece 412 are both connected to the upper body portion 410. The first upper connecting piece 411 and the second upper connecting piece 412 are respectively connected to the electrode terminals 111 of two different battery units 1, and the two different battery units 1 are electrically connected through the upper body portion 410. In order to improve a consistency of the first upper connecting piece 411 and the second upper connecting piece 412, both of them can protrude from a same side of the upper body portion 410. The first upper connecting piece 411 and the second upper connecting piece 412 extend in a plane different from a plane where the upper body portion 410 extends, i.e., they are bent with respect to the upper body portion 410. In view of an inevitable vibration and swell problems during operation of the battery module, in the embodiment shown in FIG. 3, an arc transition is provided between the first upper connecting piece 411 and the upper body portion 410 and between the second upper connecting piece 412 and the upper body portion 410, so that they can have stronger adaptability, and the whole upper bridging busbar 41 can have a stronger structural strength and thus is unlikely to be broken.

At least one of the first upper connecting piece 411 and the second upper connecting piece 412 is bent with respect to the upper body portion 410 and protrudes from the upper body portion 140 via the arc. A radian and dimension of the arc can be altered depending upon practical situations, which can not only reduce the space occupied by the upper bridging busbar 41, but also improve a bending resistance of the entire upper bridging busbar 41. In addition, such structure can also distinguish the upper bridging busbar 41 from the lower bridging busbar 42 so as to achieve the fool proofing effect during the assembly process of the upper bridging busbar 41 and the lower bridging busbar 42.

Further, the lower bridging busbar 42 includes a lower body portion 420, a first lower connecting piece 421 and a second lower connecting piece 422. The first lower connecting piece 421 and the second lower connecting piece 422 extend from a same side of the lower body portion 420, which can maximize the current-passing area of the first lower connecting piece 421 and the second lower connecting piece 422 with a same dimension. The first lower connecting piece 421 and the second lower connecting piece 422 are also respectively connected to the electrode terminals 111 of two different battery units 1, and the two different battery units 1 are electrically connected through the lower body portion 420.

In order to ensure a better fit between the bridging busbar 4 and the electrode terminal 111, surfaces of the first upper connecting piece 411, the second upper connecting piece 412, the first lower connecting piece 421 and the second lower connecting piece 422 facing towards the battery unit 1 are on a same plane, so as to guarantee a relatively large contact area between their surfaces facing towards the battery unit 1 and the electrode terminal 111. In an embodiment, by bending the first upper connecting piece 411, the second upper connecting piece 412, the first lower connecting piece 421 or the second lower connecting piece 422, their surfaces facing towards the battery unit 1 can be set on the same plane. That is, in view of the upper bridging busbar 41 being located above the lower bridging busbar 42, the first upper connecting piece 411 and the second upper connecting piece 412 can be bent, i.e., the first upper connecting piece 411 and the second upper connecting piece 412 can be bent with respect to the upper body portion 410 and protrude from the upper body portion 410 via the arc. It should be note that one or more of the first upper connecting piece 411, the second upper connecting piece 412, the first lower connecting piece 421 and the second lower connecting piece 422 may be shifted or bent due to the vibration of the battery module, the swell of the battery cell 11 or the like factor after the battery module has operated for a period of time. This situation is not contradictory to the concept of the present disclosure, and shall fall within the protection scope of the present disclosure. In addition, in consideration of processing precision, error of the measuring instrument and the like, the first upper connecting piece 411, the second upper connecting piece 412, the first lower connecting piece 421 and the second lower connecting piece 422 should be considered as coplanar as long as they have a planeness smaller than or equal to 1mm.

Further, as shown in FIG. 3, each of the first upper connecting piece 411, the second upper connecting piece 412, the first lower connecting piece 421 and the second lower connecting piece 422 is provided with a locating hole 4111. During the assembly process of the battery module, the locating between the bridging busbar 4 and the electrode terminal 111 can be accomplished by means of the locating hole 4111. In addition, the locating holes 4111 can improve a melting effect between the bridging busbar 4 and the electrode terminal 111 during the welding process, thereby enhancing the reliability of the connection therebetween. In an example, the locating hole 4111 is a circular hole.

Further, as shown in FIG. 3, a hole spacing between the locating hole 4111 on the first upper connecting piece 411 and the locating hole 4111 on the first lower connecting piece 421 is D1, and a hole spacing between the locating hole 4111 on the second upper connecting piece 412 and the locating hole 4111 on the second lower connecting piece 422 is D2. In order to improve the accuracy of the locating of the locating holes 4111 and the consistency of the bridging busbars, D1 is equal to D2.

Further, as shown in FIG. 3, a spacing between the first upper connecting piece 411 and the first lower connecting piece 421 is P1. The inevitable vibration or swell and the like problem during an operation of the battery module may result in a relative movement between the upper bridging busbar 41 and the lower bridging busbar 42. It is preferable that D1 is 5 to 1.5 times P1, in order to avoid that the upper jumper 41 and the lower jumper 42 are brought into contact or the distance therebetween is too small even in presence of the relative movement between the upper bridging busbar 41 and the lower bridging busbar 42. In this way, both the upper bridging busbar 41 and the lower bridging busbar 42 can have a desired current-passing ability. Similarly, a spacing between the second upper connecting piece 412 and the second lower connecting piece 422 is P2, and D2 is 5 to 1.5 times P2.

The two electrode output connecting pieces 2 of the battery module can be disposed on a same side of the battery module. For example, as shown in FIG. 1, the two electrode output connecting pieces 2 are both disposed on a same side of the battery module in the length direction. During the assembly process of the battery module, it is only need to reserve an installation space at a position where the two electrode output connecting pieces 2 are located, and the reserved installation space can be formed by the frame (such as the end plate) of the module. Such arrangement can reduce the space occupied by the battery module when compared with an arrangement in which the electrode output connecting pieces 2 are disposed on the same side in a height direction or a width direction. Further, in a case of an unaltered dimension of the frame of the battery module, disposing the two electrode output connecting pieces 2 of the battery module on the same side can further avoid the short circuit in the battery module, which may be caused by the electrode output connecting piece 2 getting into contact with the frame when the battery module is pressed and there is a small distance therebetween. It should be understood that, as shown in FIG. 1, the length direction of the battery module is direction X, the width direction of the battery module is direction Y, and the height direction of the battery module is direction Z.

In another aspect, when the two electrode output connecting pieces 2 of the battery module are both disposed on a same side of the battery module, the dimension of the whole battery module can be reduced, the energy density of the battery module can be enhanced, and the length of the bridging busbar 4 can be reduced. In this way, the bridging busbars 4 will generate less heat during the operation of the battery module, and thus the safety performance of the battery module can be improved. Further, errors are less likely to occur during the assembly process of the battery module when the bridging busbars 4 have a smaller length, thereby facilitating the assembly process of the battery module.

When the battery units 1 are connected by the bridging busbars 4, the bridging busbar 4 can bridge one battery unit 1, two battery units 1, or more battery units 1, which is not specifically limited herein. In an embodiment, in the assembly process of a battery module, the bridging busbar 4 can bridge an odd number of battery units 1, so as to connect these battery units 1 together with the adjacent busbar 3. In another embodiment, the bridging busbar 4 can bridge an even number of battery units 1, so as to connect these battery units 1 together with the adjacent busbar 3. In the manufacturing process of the battery module, the connection manner can be selected according to practical situations.

In an embodiment, as shown in FIG. 1, two battery units 1 that are spaced by one battery unit 1 located therebetween are connected in series through the bridging busbar 4, and two adjacent battery units 1 are connected in series through the adjacent busbar 3, so as to connect all the battery units 1 together and form an electrical connection path. In the assembly process of a battery module adopting such connection manner, its operation is easy, and since the bridging busbars 4 and the adjacent busbars 3 are simple in structure, this can facilitate manufacturing and assembling.

Further, the plurality of bridging busbars 4 can have a same length or a same shape, which can standardize components in the battery module, thereby further simplifying the processing of the bridging busbars 4 as well as the process of assembling the bridging busbars 4 with the battery units 1.

In an embodiment, the two electrode output connecting pieces 2 are arranged to extend in a same direction. As shown in FIG. 1, the two electrode output connecting pieces 2 both extend along the length direction of the battery module, so that the electrode output connecting pieces 2 would not contact the frame of the battery module, which would otherwise result in the short-circuit in the battery module, even if the battery module is subjected to squeezing from several directions other than the length direction during its opeation.

## Claims

1. A battery module, **characterized in** comprising:
a plurality of battery units (1) connected in series;
an electrode output connecting piece (2) disposed at an output end of the plurality of battery units (1);
a plurality of bridging busbars (4), each connecting two battery units (1) spaced by another battery unit (1) or more battery units (1) among the plurality of battery units (1); and
an adjacent busbar (3), connecting adjacent battery units (1) among the plurality of battery units (1),
wherein an electrical connection path is formed in the battery module by the electrode output connecting piece (2), the plurality of bridging busbars (4) and the adjacent busbar (3),
at least two of the plurality of bridging busbars (4) partially overlap with and fit one another in an electrical insulation manner as a group,
the plurality of bridging busbars (4) comprises an upper bridging busbar (41) and a lower bridging busbar (42),
the upper bridging busbar (41) and the lower bridging busbar (42) partially overlapping with each other in an insulating manner,
an insulator (5) is provided between the upper bridging busbar (41) and the lower bridging busbar (42), and
a periphery of the insulator (5) extends beyond a circumference of an overlapping portion between the upper bridging busbar (41) and the lower bridging busbar (42) by 2mm to 6 mm.

2. The battery module according to claim 1, **characterized in that** the upper bridging busbar (41) comprises an upper body portion (410), a first upper connecting piece (411) and a second upper connecting piece (412), and the first upper connecting piece (411) and the second upper connecting piece (412) protrude from a same side of the upper body portion (410),at least one of the first upper connecting piece (411) and the second upper connecting piece (412) is connected to the upper body portion (410) via an arc transition.

3. The battery module according to claim 2, **characterized in that** the lower bridging busbar (42) comprises a lower body portion (420), a first lower connecting piece (421) and a second lower connecting piece (422), the first lower connecting piece (421) and the second lower connecting piece (422) protruding from a same side of the lower body portion (420).

4. The battery module according to claim 3, **characterized in that** surfaces of the first upper connecting piece (411), the second upper connecting piece (412), the first lower connecting piece (421) and the second lower connecting piece (422) facing towards the plurality of battery units (1) are coplanar.

5. The battery module according to claim 3, **characterized in that** each of the first upper connecting piece (411), the second upper connecting piece (412), the first lower connecting piece (421) and the second lower connecting piece (422) is provided with a locating hole (4111).

6. The battery module according to claim 5, **characterized in that** a distance D1 between the locating hole (4111) of the first upper connecting piece (411) and the locating hole (4111) of the first lower connecting piece (421) is equal to a distance D2 between the locating hole (4111) of the second upper connecting piece (412) and the locating hole (4111) of the second lower connecting piece (422).

7. The battery module according to claim 5, **characterized in that** a distance D1 between the locating hole (4111) of the first upper connecting piece (411) and the locating hole of the first lower connecting piece (421) is five times to fifteen times a distance P1 between the first upper connecting piece (411) and the first lower connecting piece.

8. The battery module according to claim 5, **characterized in that** a distance D2 between the locating hole (4111) of the second upper connecting piece (412) and the locating hole (4111) of the second lower connecting piece (422) is five times to fifteen times a distance P2 between the second upper connecting piece (412) and the second lower connecting piece (422).

## Patentansprüche

1. Ein Batteriemodul, **dadurch gekennzeichnet, dass** es Folgendes umfasst:
eine Mehrzahl von in Reihe geschalteten Batterieeinheiten (1),
ein Anschlussstück für einen Elektrodenausgang (2), das an einer Ausgangsseite der Mehrzahl von Batterieeinheiten (1) angeordnet ist,
eine Mehrzahl von überbrückenden Sammelschienen (4), die jeweils zwei Batterieeinheiten (1) verbinden, die eine andere Batterieeinheit (1) oder mehrere Batterieeinheiten (1) aus der Mehrzahl von Batterieeinheiten (1) auseinanderliegen, und
eine angrenzende Sammelschiene (3), die angrenzende Batterieeinheiten (1) aus der Mehrzahl von Batterieeinheiten (1) verbindet,
wobei ein elektrischer Verbindungsweg im Batteriemodul durch das Anschlussstück für einen Elektrodenausgang (2), die Mehrzahl von überbrückenden Sammelschienen (4) und die angrenzende Sammelschiene (3) gebildet wird,
mindestens zwei aus der Mehrzahl von überbrückenden Sammelschienen (4) sich teilweise überlappen und als Gruppe isolierend zusammenwirken,
die Mehrzahl von überbrückenden Sammelschienen (4) eine obere überbrückende Sammelschiene (41) und eine untere überbrückende Sammelschiene (42) umfassen,
die obere überbrückende Sammelschiene (41) und untere überbrückende Sammelschiene (42) sich teilweise isolierend überlappen,
ein Isolator (5) zwischen oberer überbrückender Sammelschiene (41) und unterer überbrückender Sammelschiene (42) eingebaut ist und
ein Randbereich des Isolators (5) sich 2 bis 6 mm über einen Umfang eines überlappenden Bereichs zwischen der oberen überbrückenden Sammelschiene (41) und der unteren überbrückenden Sammelschiene (42) erstreckt.

2. Das Batteriemodul gemäß Anspruch 1, **dadurch gekennzeichnet, dass** die obere überbrückende Sammelschiene (41) einen oberen Körperbereich (410), ein erstes oberes Verbindungsstück (411) und ein zweites oberes Verbindungsstück (412) aufweist und das erste obere Verbindungsstück (411) und das zweite obere Verbindungsstück (412) über eine gleiche Seite des oberen Körperbereichs (410) überstehen, wobei mindestens das erste obere Verbindungsstück (411) oder das zweite obere Verbindungsstück (412) über einen Bogenübergang mit dem oberen Körperbereich (410) verbunden ist.

3. Das Batteriemodul gemäß Anspruch 2, **dadurch gekennzeichnet, dass** die untere überbrückende Sammelschiene (42) einen unteren Körperbereich (420), ein erstes unteres Verbindungsstück (421) und ein zweites unteres Verbindungsstück (422) aufweist und das erste untere Verbindungsstück (421) und das zweite untere Verbindungsstück (422) über eine gleiche Seite des unteren Körperbereichs (420) überstehen.

4. Das Batteriemodul gemäß Anspruch 3, **dadurch gekennzeichnet, dass** die Oberflächen des ersten oberen Verbindungsstücks (411), des zweiten oberen Verbindungsstücks (412), des ersten unteren Verbindungsstücks (421) und des zweiten unteren Verbindungsstücks (422) zur Mehrzahl der Batterieeinheiten (1) hinzeigen und koplanar sind.

5. Das Batteriemodul gemäß Anspruch 3, **dadurch gekennzeichnet, dass** erstes oberes Verbindungsstück (411), zweites oberes Verbindungsstück (412), erstes unteres Verbindungsstück (421) und zweites unteres Verbindungsstück (422) jeweils eine Aufnahmebohrung (4111) aufweisen.

6. Das Batteriemodul gemäß Anspruch 5, **dadurch gekennzeichnet, dass** eine Distanz D1 zwischen der Aufnahmebohrung (4111) des ersten oberen Verbindungsstücks (411) und der Aufnahmebohrung (4111) des ersten unteren Verbindungsstücks (421) der Distanz D2 zwischen der Aufnahmebohrung (4111) des zweiten oberen Verbindungsstücks (411) und der Aufnahmebohrung (4111) des zweiten unteren Verbindungsstücks (421) entspricht.

7. Das Batteriemodul gemäß Anspruch 5, **dadurch gekennzeichnet, dass** eine Distanz D1 zwischen der Aufnahmebohrung (4111) des ersten oberen Verbindungsstücks (411) und der Aufnahmebohrung des ersten unteren Verbindungsstücks (421) fünf- bis fünfzehnmal der Distanz P1 zwischen dem ersten oberen Verbindungsstück (411) und dem ersten unteren Verbindungsstück entspricht.

8. Das Batteriemodul gemäß Anspruch 5, **dadurch gekennzeichnet, dass** eine Distanz D2 zwischen der Aufnahmebohrung (4111) des zweiten oberen Verbindungsstücks (412) und der Aufnahmebohrung (4111) des zweiten unteren Verbindungsstücks (422) fünf- bis fünfzehnmal der Distanz P2 zwischen dem ersten unteren Verbindungsstück (412) und dem zweiten unteren Verbindungsstück (422) entspricht.

## Revendications

1. Module de batterie, **caractérisé par** le fait de comprendre :
une pluralité d'unités de batterie (1) connectées en série ;
un élément de connexion de sortie d'électrode (2) disposé à une extrémité de sortie de la pluralité d'unités de batterie (1) ;
une pluralité de barres omnibus de pontage (4), chacune reliant deux unités de batterie (1) espacées d'une autre unité de batterie (1) ou de plusieurs autres unités de batterie (1) parmi la pluralité d'unités de batterie (1) ; et
une barre omnibus adjacente (3), reliant des unités de batterie adjacentes (1) parmi la pluralité d'unités de batterie (1),
où un chemin de connexion électrique est formé dans le module de batterie par l'élément de connexion de sortie d'électrode (2), la pluralité de barres omnibus de pontage (4) et la barre omnibus adjacente (3),
au moins deux barres omnibus parmi la pluralité de barres omnibus de pontage (4) se chevauchent partiellement et coïncident l'une avec l'autre avec isolation électrique de sorte à former un groupe,
la pluralité de barres omnibus de pontage (4) comprend une barre omnibus de pontage supérieure (41) et une barre omnibus de pontage inférieure (42),
la barre omnibus de pontage supérieure (41) et la barre omnibus de pontage inférieure (42) se chevauchant partiellement de manière isolée,
un isolant (5) est prévu entre la barre omnibus de pontage supérieure (41) et la barre omnibus de pontage inférieure (42), et
une périphérie de l'isolant (5) s'étend au-delà d'une circonférence d'une partie de chevauchement entre la barre omnibus de pontage supérieure (41) et la barre omnibus de pontage inférieure (42) de 2 mm à 6 mm.

2. Module de batterie selon la revendication 1, **caractérisé en ce que** la barre omnibus de pontage supérieure (41) comprend une partie de corps supérieure (410), un premier élément de connexion supérieur (411) et un second élément de connexion supérieur (412), et le premier élément de connexion supérieur (411) et le second élément de connexion supérieur (412) font saillie d'un même côté de la partie de corps supérieure (410), au moins l'un du premier élément de connexion supérieur (411) et du second élément de connexion supérieur (412) est connecté à la partie de corps supérieure (410) via une transition en arc.

3. Module de batterie selon la revendication 2, **caractérisé en ce que** la barre omnibus de pontage inférieure (42) comprend une partie de corps inférieure (420), un premier élément de connexion inférieur (421) et un second élément de connexion inférieur (422), le premier élément de connexion inférieur (421) et le second élément de connexion inférieur (422) faisant saillie d'un même côté de la partie de corps inférieure (420).

4. Module de batterie selon la revendication 3, **caractérisé en ce que** des surfaces du premier élément de connexion supérieur (411), du second élément de connexion supérieur (412), du premier élément de connexion inférieur (421) et du second élément de connexion inférieur (422) orientées vers la pluralité d'unités de batterie (1) sont coplanaires.

5. Module de batterie selon la revendication 3, **caractérisé en ce que** chacun du premier élément de connexion supérieur (411), du second élément de connexion supérieur (412), du premier élément de connexion inférieur (421) et du second élément de connexion inférieur (422) est pourvu d'un orifice de positionnement (4111).

6. Module de batterie selon la revendication 5, **caractérisé en ce qu'**une distance D1 entre l'orifice de positionnement (4111) du premier élément de connexion supérieur (411) et l'orifice de positionnement (4111) du premier élément de connexion inférieur (421) est égale à une distance D2 entre l'orifice de positionnement (4111) du second élément de connexion supérieur (412) et l'orifice de positionnement (4111) du second élément de connexion inférieur (422).

7. Module de batterie selon la revendication 5, **caractérisé en ce qu'**une distance D1 entre l'orifice de positionnement (4111) du premier élément de connexion supérieur (411) et l'orifice de positionnement du premier élément de connexion inférieur (421) est cinq fois à quinze fois supérieure à une distance P1 entre le premier élément de connexion supérieur (411) et le premier élément de connexion inférieur.

8. Module de batterie selon la revendication 5, **caractérisé en ce qu'**une distance D2 entre l'orifice de positionnement (4111) du second élément de connexion supérieur (412) et l'orifice de positionnement (4111) du second élément de connexion inférieur (422) est cinq fois à quinze fois supérieure à une distance P2 entre le second élément de connexion supérieur (412) et le second élément de connexion inférieur (422).
